# EUROPÄISCHE PATENTANMELDUNG

(11) **EP 2 957 808 A1**
(43) Veröffentlichungstag der Anmeldung: **23.12.2015**
(21) Anmeldenummer: 15171756.8
(22) Anmeldetag: 12.06.2015
(51) Int. Cl.: F16L 27/08, F16L 27/12, F16L 43/00

(54) **KONNEKTOR ZUM VERBINDEN ZWEIER ROHRFÖRMIGER HYDRAULISCHER LEITUNGEN**

(30) Priorität: 16.06.2014 DE 102014211493
(71) Anmelder: Schaeffler Technologies AG & Co. KG, 91074 Herzogenaurach (DE)
(72) Erfinder: Baßler, Manuel, 77855 Achern (DE)

(57) **Zusammenfassung**

Die vorliegende Erfindung betrifft einen Konnektor (10) zum Verbinden zweier rohrförmiger Hydraulikleitungen (12, 14) zum Führen von Hydraulikflüssigkeit für ein hydraulisches System, insbesondere für ein hydraulisch betätigbares Kupplungssystem, wobei der Konnektor (10) einen entlang einer ersten Achse A₁ ausgerichteten ersten Verbindungsbereich (16) zum Anordnen und Fixieren der ersten rohrförmigen Hydraulikleitung (12) aufweist und wobei der Konnektor (10) einen entlang einer zweiten Achse A₂ ausgerichteten zweiten Verbindungsbereich (18) zum Anordnen und Fixieren der zweiten rohrförmigen Hydraulikleitung (14) aufweist, wobei die beiden Achsen A₁, A₂ in einem Winkel zueinander ausgerichtet sind, der ungleich 0° ist, dadurch gekennzeichnet, dass der Konnektor (10) zwei insbesondere halbschalenartig ausgestaltete Konnektorteile (30) aufweist, zwischen denen die rohrförmigen Hydraulikleitungen (12, 14) anordbar sind und die zum druckdichten Führen von Hydraulikflüssigkeit aneinander fixierbar sind. Ein derartiger Konnektor (10) erlaubt auf besonders einfache und kostengünstige Weise einen Toleranzausgleich der rohrförmigen Hydraulikleitungen.

## Beschreibung

Die vorliegende Erfindung betrifft einen Konnektor zum Verbinden zweier hydraulischer Leitungen. Die vorliegende Erfindung betrifft insbesondere einen Konnektor zum Verbinden zweier rohrförmiger hydraulischer Leitungen, welche in einem Winkel zu einander verlaufen beziehungsweise derartig angeordnet sind.

Ein hydraulisches System, umfassend einen Geberzylinder, einen Nehmerzylinder sowie eine diese verbindende Druckmediumsleitung, wird beispielsweise in einem Einrücksystem oder Ausrücksystem zur Betätigung einer Fahrzeugkupplung im Antriebsstrang von Kraftfahrzeugen verwendet. Die Fahrzeugkupplung dient der wahlweisen Unterbrechung der Drehmomentübertragung zwischen einem Verbrennungsmotor und einem Schaltgetriebe.

In der Druckmediumsleitung werden dabei oftmals Konnektoren verwendet, um eine geberseitige Hydraulikkomponente und eine nehmerseitige Hydraulikkomponente beziehungsweise an diesen angeschlossenen Hydraulikleitungen zu verbinden.

Stahlleitungen als Hydraulikleitung haben dabei oftmals eine hohe Fertigungstoleranz. Speziell bei der Ausgestaltung von hydraulischen Systemen aufweisend einen Nehmerzylinder, wie etwa einen sogenannten CSC (Concentric Slave Cylinder), ist oftmals eine Fixierung der Leitung an zwei Stellen vorteilhaft oder zwingend. Beispielsweise aufgrund der Toleranzen bei der Herstellung können beispielsweise Spannungen in der Leitung entstehen, welche die Lebensdauer der Leitungen oder damit verbundener Bauteile beeinträchtigen. Ebenso kann der Fall auftreten, dass bei der Fixierung der Leitung an dem Geberzylinder, wie etwa an dem CSC, der andere gewünschte Fixierpunkt nicht problemlos erreicht wird.

Um dieses Problem zu umgehen ist es bekannt, Stahlleitungen zu verbiegen. Nachteilig dabei ist jedoch, dass Stahlleitungen eine hohe Steifigkeit aufweisen und sich nicht ohne weiteres verbiegen lassen, ohne gegebenenfalls deren dauerhafte Stabilität zu beeinflussen. Wird ein elastisches Element als Toleranzausgleich eingebracht, wird das System träger und reagiert nicht mehr in der gleichen Geschwindigkeit.

Aus dem Dokument DE 103 21 287 A1 ist ein hydraulisches System umfassend einen Geberzylinder, einen Nehmerzylinder, eine Dämpfungseinrichtung und eine diese verbindende Hydraulikleitung bekannt. Dabei wird in diesem Dokument ein Druckleitungsanschluss beschrieben, der einen ersten und einen zweiten Stecker umfasst. Dabei ist der Druckleitungsanschluss mit einem Winkel von 90° ausgeführt. Ein derartiger Anschluss kann jedoch Toleranzen insbesondere von Stahlleitungen nur schwer ausgleichen.

Hiervon ausgehend ist es die Aufgabe der vorliegenden Erfindung, die aus dem Stand der Technik bekannten Nachteile zumindest teilweise zu überwinden. Es ist insbesondere die Aufgabe der vorliegenden Erfindung, einen Konnektor zum Verbinden zweier rohrförmiger Hydraulikleitungen zu schaffen, mit dem herstellungsbedingte Toleranzen der Hydraulikleitungen besonders vorteilhaft ausgeglichen werden können.

Die Lösung der Aufgabe erfolgt erfindungsgemäß durch einen Konnektor mit den Merkmalen des Anspruchs 1. Die Lösung der Aufgabe erfolgt erfindungsgemäß weiterhin durch ein hydraulisches System mit den Merkmalen des Anspruchs 7. Bevorzugte Ausgestaltungen der Erfindung sind in den Unteransprüchen angegeben, wobei weitere in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Der erfindungsgemäße Konnektor dient insbesondere zum Verbinden zweier rohrförmiger Hydraulikleitungen zum Führen von Hydraulikflüssigkeit für ein hydraulisches System, insbesondere für ein hydraulisch betätigbares Kupplungssystem. Er weist einen entlang der ersten Achse A₁ ausgerichteten ersten Verbindungsbereich zum Anordnen und Fixieren einer ersten rohrförmigen Hydraulikleitung auf und weist einen entlang einer zweiten Achse A₂ ausgerichteten zweiten Verbindungsbereich zum Anordnen und Fixieren der zweiten rohrförmigen Hydraulikleitung auf. Dabei sind die beiden Achsen A₁, A₂ in einem Winkel zueinander ausgerichtet, der ungleich 0° und insbesondere ungleich 180° ist. Der Konnektor weist ferner zwei insbesondere halbschalenartig ausgestaltete Konnektorteile auf, zwischen denen die rohrförmigen Leitungen anordbar sind und die zum druckdichten Führen von Hydraulikflüssigkeit aneinander fixierbar sind.

Ein derartiger Konnektor weist mit Bezug auf die aus dem Stand der Technik bekannten Lösungen signifikante Vorteile auf. Insbesondere können auf einfache und schonende Weise Toleranzen der Ausrichtung beziehungsweise der Anordnung von Stahlleitungen ausgeglichen und eine vergleichsweise einfache Anordnung von hydraulischen Systemen ermöglicht werden.

Der vorbeschriebene Konnektor dient somit insbesondere zum Ausbilden einer Verbindung, welche bevorzugt dazu verwendet werden kann, verschiedene Hydraulikkomponenten in einem Kupplungssystem, etwa eines Kraftfahrzeugs, beziehungsweise insbesondere in einem Einrücksystem oder Ausrücksystem für Kupplungen, wie beispielsweise für Doppelkupplungen, miteinander zu verbinden. Insbesondere kann der vorbeschriebene Konnektor dazu dienen, zwei Hydraulikleitungen, insbesondere zwei rohrförmige Hydraulikleitungen, welche jeweils mit einer hydraulischen Komponente verbunden beziehungsweise verbindbar sind, in einem vorbeschriebenen Hydrauliksystem miteinander zu verbinden.

Unter einer rohrförmigen Hydraulikleitung ist dabei im Gegensatz zu einer elastischen Hydraulikleitung insbesondere eine derartige Hydraulikleitung zu verstehen, die aus einem Material geformt ist, das unflexibel beziehungsweise nicht elastisch ist. Es kann etwa eine Biegefestigkeit (σB 3,5%) nach ISO 178 in einem Bereich von ungefähr 200 MPa oder darüber aufweisen. Insbesondere kann unter einer rohrförmigen Hydraulikleitung eine Leitung verstanden werden, dessen Material eine Biegefestigkeit (σB 3,5%) nach ISO 178 in einem Bereich von ungefähr größer oder gleich 100 MPa, beispielsweise größer oder gleich 150 MPa, aufweisen kann, wobei die vorgenannten Werte nur beispielhaft und nicht beschränkend sind. Beispielsweise kann eine rohrförmige Hydraulikleitung eine Kunststoffleitung, eine metallische Hydraulikleitung oder eine Stahlleitung sein.

Die erste Hydraulikkomponente und die zweite Hydraulikkomponente sind dabei ferner zweckmäßigerweise von einander verschieden. Beispielsweise kann eine der ersten und der zweiten Hydraulikkomponente eine Quelle für Hydraulikflüssigkeit, wie etwa einen Geberzylinder, umfassen, weshalb die erste Hydraulikleitung beziehungsweise der Konnektor von dieser Seite mit Hydraulikdruck beaufschlagt wird. Ein diesseitiger Anschluss des Konnektors kann somit der geberseitige Anschluss sein. Weiterhin kann eine weitere der ersten und der zweiten Hydraulikkomponente mit der eigentlichen Kupplung verbunden oder diese selbst sein, weshalb ein entsprechender diesseitiger Anschluss des Konnektors der nehmerseitige Anschluss sein kann. Beispielsweise kann der nehmerseitige Anschluss mit einer Hydraulikkomponente verbunden sein, um einen Einrückhebel oder Ausrückhebel zum Öffnen oder Schließen der Kupplung anzusteuern. Dies kann zum Beispiel ein Kupplungsnehmerzylinder ("clutch master cylinder", CMC oder "clutch slave cylinder", CSC) sein. Dabei kann als Hydraulikflüssigkeit beispielsweise und nicht beschränkend Bremsflüssigkeit oder Mineralöl verwendet werden. Verwendbare Drücke der Hydraulikflüssigkeit sind dem Fachmann dabei gut bekannt und können rein beispielhaft und in keiner Weise beschränkend in einem Bereich von 30-40bar liegen, wobei auch deutlich geringere oder auch höhere Drücke anliegen können, wie beispielsweise im Bereich von 5bar.

Um eine derartige Verbindung zu realisieren, weist der vorbeschriebene Konnektor einen entlang einer ersten Achse A₁ ausgerichteten ersten Verbindungsbereich zum Anordnen und Fixieren einer ersten rohrförmigen Hydraulikleitung auf und weist einen entlang einer zweiten Achse A₂ ausgerichteten zweiten Verbindungsbereich zum Anordnen und Fixieren einer zweiten rohrförmigen Hydraulikleitung auf. Unter den entsprechenden Verbindungsbereichen sind dabei insbesondere zu verstehen Bereiche beziehungsweise Abschnitte des Konnektors, an denen die entsprechenden Hydraulikleitungen anordbar beziehungsweise fixierbar sind und welche die entsprechende Hydraulikleitung somit aufnehmen. Dabei sind Hydraulikleitungen insbesondere derart fixierbar, dass eine dichtende Verbindung zwischen den Hydraulikleitungen und dem Konnektor ausgebildet wird. Diese dichtende Verbindung kann insbesondere den vorgenannten Drücken standhalten, beziehungsweise derartigen Drücken, welche in dem Hydrauliksystem der entsprechenden Anwendung vorliegen können.

Dabei sind die entsprechenden Verbindungsbereiche entlang entsprechender Achsen A₁ und A₂ ausgerichtet, so dass die in diesen Verbindungsbereichen angeordneten Hydraulikleitungen zumindest in deren von dem Konnektor aufgenommenen Endbereich ebenfalls jeweils entlang der Achsen A₁ und A₂ ausgerichtet sein können. Dabei sind die beiden Achsen A₁, A₂ in einem Winkel zueinander ausgerichtet, der ungleich 0° und insbesondere ungleich 180° ist, was im Sinne der vorliegenden Erfindung insbesondere bedeuten kann, dass die Verbindungsbereiche beziehungsweise die in den Verbindungsbereichen angeordneten hydraulischen Leitungen nicht parallel angeordnet sind.

Beispielsweise können die beiden Achsen A₁, A₂ in einem Winkel zueinander ausgerichtet sein, der in einem Bereich liegt von < 180°, beispielsweise ≥ 90° bis < 180°, oder auch ≤ 90. Insbesondere in dieser Ausgestaltung kann es möglich sein, dass eine vielfältige Anzahl von gering ausgestalteten Toleranzen der hydraulischen Leitungen ausgeglichen werden kann. Somit kann insbesondere in dieser Ausgestaltung ein Mittel geschaffen werden, dass für einen besonders großen Anteil an hydraulischen Systemen eine sichere Lösung geschaffen werden kann, um rohrförmige hydraulische Leitungen miteinander zu verbinden.

Durch diese Ausgestaltung ergibt sich der Vorteil, dass Hydraulikleitungen sicher und dichtend miteinander verbunden werden können, die nicht parallel sind und somit einem Winkel zueinander einschließen. Auf diese Weise lässt sich besonders vorteilhaft eine Toleranz der Ausrichtung der entsprechenden Leitungen zueinander ausgleichen, ohne die Leitungen zu verbiegen beziehungsweise zu verformen. Somit kann insbesondere ein Toleranzausgleich für rohrförmige Leitungen geschaffen werden, der nicht die Steifigkeit der Leitungen beeinflusst.

Dadurch, dass der Konnektor ferner zwei insbesondere halbschalenartig ausgestaltete Konnektorteile aufweist, zwischen denen die rohrförmigen Leitungen anordbar sind und die zum druckdichten Führen von Hydraulikflüssigkeit aneinander fixierbar sind, lässt sich der Toleranzausgleich ferner auf besonders schonende und einfache Weise herstellen.

Insbesondere lässt sich durch den vorbeschriebenen Konnektor eine Verbindung der beiden rohrförmigen Hydraulikleitungen realisieren, ohne dass die Leitungen bei einem Einfügen in den Konnektor verbogen werden müssten oder die Leitungen zeitlich vor einem Anschluss an entsprechenden hydraulische Komponenten mit dem Konnektor verbunden werden müssen. Denn dadurch, dass der Konnektor zumindest zweiteilig ausgestaltet ist, können die Leitungen in ihrer Endposition ausgerichtet werden und von der geöffneten Seite in den Konnektor gelegt werden. Im Anschluss können die Konnektorteile miteinander verbunden werden, so dass eine druckdichte Verbindung zwischen den Konnektorteilen ausgebildet wird, welche den in dem entsprechenden Anwendungsgebiet anliegenden Drücken standhalten kann. Dabei können die Konnektorteile insbesondere halbschalenartig ausgebildet sein, was bedeutet, dass die Konnektorteile eine Schale ausbilden, welche die entsprechenden Hydraulikleitungen aufnimmt.

Somit kann durch einen vorbeschriebenen Konnektor verhindert werden, dass komplizierte Anordnungen verschiedener hydraulischer insbesondere rohrförmiger Leitungen, beispielsweise in Verbindung mit einem in Geberzylinder, wie etwa einem CSC, ausgebildet werden müssen, um verschiedene hydraulische Bauteile miteinander zu verbinden. Ferner werden Toleranzen der Leitungen verkleinert beziehungsweise ausgeglichen.

Darüber hinaus können durch einen vorbeschriebenen Konnektor auf einfache Weise auch winkelige Verbindungen von hydraulischen Leitungen ermöglicht werden, ohne dass auf Winkel in hydraulischen Leitungen zurückgegriffen werden müsste. Dadurch können bereits durch die Ausgestaltung des Konnektors zusätzliche Freiheitsgrade besonders einfach und schonend erzielt werden. Somit können auch komplexe Strukturen beziehungsweise Leitungsgeometrien auf einfache Weise realisiert werden, ohne auf eine Aneinanderreihung von mehreren Adaptern zurückgreifen zu müssen, was eine besonders definierte Struktur ermöglichen kann.

Zusätzlich kann auf eine Verformung der Leitungen oder das Einbringen von Spannungen in Leitungen gänzlich verzichtet werden. Somit kann die Langzeitstabilität eines hydraulischen Systems unter Verwendung eines derartigen Konnektors verglichen mit Lösungen aus dem Stand der Technik verbessert werden und die Herstellung ferner vereinfacht und kostengünstiger gestaltet werden. Ferner kann so verhindert werden, dass durch ein Verbiegen von rohrförmigen Leitungen deren Steifigkeit reduziert wird, wodurch die Reaktionsfähigkeit des hydraulischen Systems gleich bleiben kann beziehungsweise eine Verschlechterung der Reaktionsfähigkeit verhindert werden kann.

Für eine einfache Herstellung von hydraulischen System können beispielsweise Konnektoren in verschiedenen Variationen, insbesondere in verschiedenen Winkeln zwischen den Achsen A₁ und A₂, standardisiert und vorgehalten werden. Dadurch können auf einfache Weise unterschiedliche hydraulische Systeme durch ein Zurückgreifen auf verschiedene standardisierte Konnektoren ermöglicht werden.

Zusammenfassend erlaubt ein vorbeschriebener Konnektor auf einfache Weise einen Toleranzausgleich von rohrförmigen Leitungen bei dem Herstellen von hydraulischen Systemen, wodurch ein Verbiegen von rohrförmigen Leitungen bei der Herstellung von hydraulischen Systemen beziehungsweise bei dem Verbinden hydraulischer Bauteile verhindert werden kann.

In einer bevorzugten Ausgestaltung können der erste und der zweite Verbindungsbereich jeweils ein Fixiermittel aufweisen, welches zum Wechselwirken mit jeweils einem entsprechenden Fixiermittel der entsprechenden rohrförmigen Hydraulikleitung ausgestaltet ist, wobei zumindest ein Fixiermittel des ersten oder des zweiten Verbindungsbereichs einen Toleranzausgleich der axialen Position des Fixiermittels wenigstens einer Hydraulikleitung aufweist. In dieser Ausgestaltung kann somit durch die entsprechenden Fixiermittel sichergestellt werden, dass die entsprechende Hydraulikleitung nicht axial aus dem Konnektor bewegt wird, sondern einen sicheren Halt aufweist. Darüber hinaus kann durch den Toleranzausgleich der axialen Position des Fixiermittels ein weiterer Freiheitsgrad geschaffen werden. Dabei ist unter einem derartigen Toleranzausgleich insbesondere zu verstehen eine Möglichkeit, eine hydraulische Leitung im Wesentlichen unabhängig von einer Toleranz hinsichtlich ihrer Länge beziehungsweise der insbesondere axialen Position ihres Fixiermittels sicher in dem Konnektor fixieren zu können. Beispielsweise kann diese Ausgestaltung realisiert werden, wenn zumindest ein Fixiermittel des ersten und/oder des zweiten Verbindungsbereichs einen Querschnitt in der Form eines Langlochs aufweist. In dieser Ausgestaltung kann beispielsweise ein Fixiermittel der hydraulischen Leitung in dem Langloch angeordnet werden, wobei die axiale Position des Fixiermittels und dabei etwa die Länge der entsprechenden hydraulischen Leitung begrenzt durch die Größe des Langlochs variabel sein kann. Somit kann in dieser Ausgestaltung ein besonders vielfältiger Toleranzausgleich mit dem Schaffen vielfältiger Freiheitsgrade realisiert werden.

In einer weiteren bevorzugten Ausgestaltung kann zwischen den Konnektorteilen eine Dichtung zum Abdichten einer in dem Konnektor angeordneten Führung für Hydraulikflüssigkeit angeordnet sein. In dieser Ausgestaltung kann eine besonders einfache Ausgestaltung des Konnektors realisierbar sein, da die Konnektorteile mit einfachen und bekannten Mitteln auf einfache und kostengünstige Weise miteinander verbunden werden können, wobei die Dichtung eine Druckdichtheit der Hydraulikführung in dem Konnektor mit Bezug auf die äußere Umgebung sicherstellt. Dabei kann eine Dichtung in an sich bekannter Weise ein Kunststoffelement, wie beispielsweise aus Ethylen-Propylen-Dien-Kautschuk (EPDM) geformt, sein, welches an einer oder an beiden der jeweiligen Verbindungsflächen der Konnektorteile fixiert, beispielsweise anvulkanisiert, ist.

In einer weiteren bevorzugten Ausgestaltung des Konnektors können die Konnektorteile miteinander verschweißt sein. Insbesondere in dieser Ausgestaltung kann auch bei hohen Drücken eine besonders dichte Ausgestaltung des Konnektors realisiert werden, so dass auch bei Anwendungen, bei welchen ein besonders hoher Hydraulikdruck vorliegt, eine besonders gute Langzeitstabilität und Sicherheit der hydraulischen Verbindung gewährleistet ist.

In einer weiteren Ausgestaltung des Konnektors kann der Konnektor zumindest teilweise aus einem Kunststoff geformt sein. Insbesondere können die beiden Konnektorteile aus einem Kunststoff geformt sein. Beispiele für geeignete Kunststoffe umfassen insbesondere thermoplastische Kunststoffe, wie etwa Polyethylen (PE), Polyetheretherketon (PEEK) oder Acrylnitril-Butadien-Styrol- (ABS) -Kunststoff. Insbesondere in dieser Ausgestaltung kann der Konnektor ein besonders geringes Gewicht aufweisen, so dass der Konnektor besonders gut für mobile Anwendungen geeignet sein kann. Somit kann in dieser Ausgestaltung insbesondere der Nachteil des Stands der Technik umgangen werden, wonach Konnektoren aus Stahl Verwendung finden, welche ein insbesondere für mobile Anwendungen gegebenenfalls unerwünscht hohes Gewicht aufweisen. Darüber hinaus können Konnektoren aus Kunststoff, etwa verglichen mit Konnektoren aus Stahl, deutlich kostengünstiger in der Herstellung sein und ferner eine besonders einfache Herstellung ermöglichen, da die Konnektorteile beispielsweise auf einfache Weise mit einer Dichtung versehen oder verschweißt werden können, wie dies vorstehend beschrieben ist.

Mit Bezug auf weitere technische Merkmale und Vorteile des vorbeschriebenen Konnektors wird hiermit explizit auf die nachstehenden Erläuterungen im Zusammenhang mit dem hydraulischen System, der Figur sowie der Figurenbeschreibung verwiesen, und umgekehrt.

Die vorliegende Erfindung betrifft ferner ein hydraulisches System, insbesondere ein hydraulisches Kupplungssystem, welches dadurch gekennzeichnet ist, dass es einen Konnektor aufweist, wie dieser vorstehend im Detail beschrieben ist, wobei an dem ersten Verbindungsbereich und an dem zweiten Verbindungsbereich jeweils eine rohrförmige Hydraulikleitung angeordnet ist. Dabei kann die rohrförmige Hydraulikleitungen aus einem Metall, Stahl oder einem Kunststoff geformt sein.

Insbesondere die vorgenannten Leitungen können beispielsweise bei einem Herstellen oder einem Anordnen eine Toleranz aufweisen oder aber gewollt in einem Winkel zueinander angeordnet werden, so dass der vorbeschriebene Konnektor insbesondere für die vorbeschriebenen Leitungen von Vorteil sein kann bzw. dass ein hydraulisches System insbesondere in Kombination der vorgenannten Hydraulikleitungen mit dem vorbeschriebenen Konnektor besonders vorteilhaft ausbildbar ist.

Dabei kann es ferner vorgesehen sein, dass wenigstens eine rohrförmige Hydraulikleitung in dem Konnektor um die Achse A₁ oder A₂ rotierbar ist. Dabei ist die Achse A₁ oder A₂ in für den Fachmann verständlicher Weise ausgewählt in Abhängigkeit davon, in welchem Verbindungsbereich die rohrförmige Hydraulikleitung angeordnet ist. In dieser Ausgestaltung kann ein weiterer Freiheitsgrad realisiert werden, was einen Toleranzausgleich noch weiter verringert und ferner eine noch größere Vielfalt an auszubildenden hydraulischen Systemen ermöglicht.

Zusammenfassend erlaubt ein vorbeschriebenes hydraulisches System auf einfache Weise einen Toleranzausgleich von rohrförmigen Leitungen bei dem Herstellen des hydraulischen Systems, wodurch beispielsweise ein Verbiegen von rohrförmigen Leitungen bei der Herstellung von hydraulischen Systemen beziehungsweise bei dem Verbinden hydraulischer Bauteile verhindert werden kann. Dadurch kann das hydraulische System besonders einfach herstellbar und ferner besonders langlebig sein.

Mit Bezug auf weitere technische Merkmale und Vorteile des vorbeschriebenen hydraulischen Systems wird hiermit explizit auf die Erläuterungen im Zusammenhang mit dem Konnektor, der Figur sowie der Figurenbeschreibung verwiesen, und umgekehrt.

Im Folgenden wird ein besonders bevorzugtes Ausführungsbeispiel der Erfindung anhand der beiliegenden Zeichnung erläutert, wobei explizit darauf hingewiesen wird, dass der erfindungsgemäße Gegenstand nicht auf das beschriebene Ausführungsbeispiel beschränkt ist. Es zeigt:

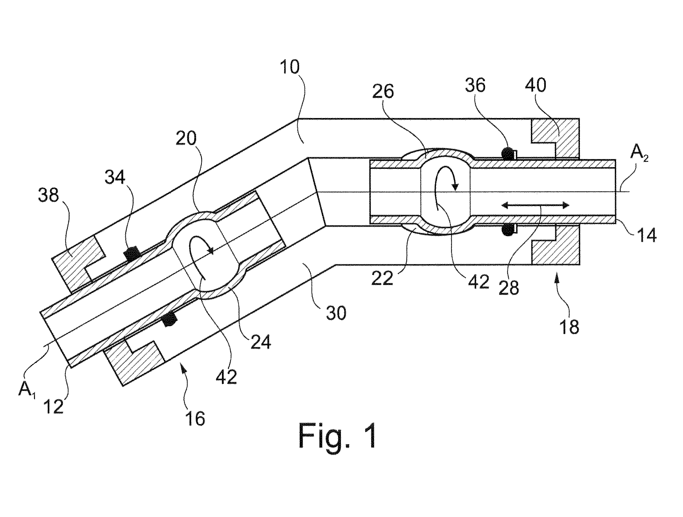

- Fig. 1: eine schematische teilweise Schnittansicht einer Ausgestaltung eines Konnektors gemäß der Erfindung mit darin angeordneten hydraulischen Leitungen.

In der Figur 1 ist ein Konnektor 10 zum Verbinden zweier rohrförmiger Hydraulikleitungen 12, 14 zum Führen von Hydraulikflüssigkeit für ein hydraulisches System, insbesondere für ein hydraulisch betätigbares Kupplungssystem, gezeigt. Das hydraulische Kupplungssystem kann beispielsweise Bestandteil sein eines Kraftfahrzeugs, etwa aufweisend eine Doppelkupplung.

Der Konnektor 10, der zumindest teilweise aus einem Kunststoff geformt sein kann, weist einen entlang einer ersten Achse A₁ ausgerichteten ersten Verbindungsbereich 16 zum Anordnen und Fixieren der ersten rohrförmigen Hydraulikleitung 12 auf und weist einen entlang einer zweiten Achse A₂ ausgerichteten zweiten Verbindungsbereich 18 zum Anordnen und Fixieren der zweiten rohrförmigen Hydraulikleitung 14 auf, wobei die beiden Achsen A₁, A₂ in einem Winkel zueinander ausgerichtet sind, der ungleich 0° und insbesondere ungleich 180° ist. Dabei können der erste und der zweite Verbindungsbereich 16, 18 jeweils ein Fixiermittel 20, 22 aufweisen, welche zum Wechselwirken mit jeweils einem entsprechenden Fixiermittel 24, 26 der rohrförmigen Hydraulikleitungen 12, 14 ausgestaltet sind.

Um eine Vielzahl von Freiheitsgraden zu ermöglichen, weist das Fixiermittel 22 des zweiten Verbindungsbereichs 18 einen Toleranzausgleich der axialen Position des Fixiermittels 26 der zweiten hydraulischen Leitung 14 auf. Im Detail ist das Fixiermittel 22 als Langloch ausgebildet, in welchem das Fixiermittel 26 angeordnet ist und dort axial verlagerbar ist, wie dies durch den Pfeil 28 dargestellt werden soll. Weiterhin sind die rohrförmigen Hydraulikleitungen 12, 14 in dem Konnektor 10 um die Achse A₁ beziehungsweise A₂ rotierbar, indem die Fixiermittel 20, 22 bogenförmig beziehungsweise zumindest teilweise kugelförmig ausgestaltet sind, was durch den Pfeil 42 dargestellt werden soll. Im Detail sind die Fixiermittel 22, 24 des Konnektors 10 als Aussparungen ausgebildet, in die die im wesentlichen kugelförmigen Fixiermittel 24, 26 der Hydraulikleitungen 12, 14 eingreifen, wobei die Aussparung des Fixiermittels 20 an die Form des Fixiermittels 24 angepasst ist und wobei die Aussparung des Fixiermittels 22 ein Langloch ausbildet, um einen axialen Toleranzausgleich des Fixiermittels 26 zu ermöglichen.

In der Figur 1 ist weiterhin zu erkennen, dass der Konnektor 10 zwei insbesondere halbschalenartig ausgestaltete Konnektorteile 30 aufweist, zwischen denen die rohrförmigen Hydraulikleitungen 12, 14 angeordnet sind, wobei in der Figur 1 eine Draufsicht auf ein Konnektorteil 30 gezeigt ist. Für eine druckdichte Führung der Hydraulikflüssigkeit sind ferner insbesondere als O-Ringe ausgestaltete Dichtelemente 34, 36 vorgesehen, welche zwischen dem Konnektor 10 und den rohrförmigen Hydraulikleitungen 12, 14 angeordnet sind. Die rohrförmige Hydraulikleitungen 12, 14 können dabei beispielsweise aus einem Metall, Stahl oder einem Kunststoff geformt sein.

Es sind ferner zwei Klemmelemente 38, 40 gezeigt, welche in einer Schnittansicht gezeigt sind. Die Klemmelemente 38, 40 können die beiden Konnektorteile 30 aneinander fixieren, wobei an den Kontaktstellen der Konnektorteile 30 entsprechende nicht gezeigte Dichtelemente vorgesehen sind. Je nach Klemmgeometrie können dabei gezielt Freiheitsgrade eingestellt werden, wobei etwa rotatorische Freiheitsgrade (Pfeile 42) oder translatorische Freiheitsgrade (Pfeil 28) je nach Klemmkraft oder Klemmgeometrie erlaubt oder verhindert werden können.

### Bezugszeichenliste

- 10: Konnektor
- 12: erste rohrförmige Hydraulikleitung
- 14: zweite rohrförmige Hydraulikleitung
- 16: erster Verbindungsbereich
- 18: zweiter Verbindungsbereich
- 20: Fixiermittel
- 22: Fixiermittel
- 24: Fixiermittel
- 26: Fixiermittel
- 28: Pfeil
- 30: Konnektorteil
- 34: Dichtelement
- 36: Dichtelement
- 38: Klemmelement
- 40: Klemmelement
- 42: Pfeil

## Patentansprüche

1. Konnektor (10) zum Verbinden einer ersten rohrförmigen Hydraulikleitung (12) mit einer zweiten rohrförmigen Hydraulikleitung (14) zum Führen von Hydraulikflüssigkeit für ein hydraulisches System, insbesondere für ein hydraulisch betätigbares Kupplungssystem, wobei der Konnektor (10) einen entlang einer ersten Achse A₁ ausgerichteten ersten Verbindungsbereich (16) zum Anordnen und Fixieren der ersten rohrförmigen Hydraulikleitung (12) aufweist und wobei der Konnektor (10) einen entlang einer zweiten Achse A₂ ausgerichteten zweiten Verbindungsbereich (18) zum Anordnen und Fixieren der zweiten rohrförmigen Hydraulikleitung (14) aufweist, wobei die beiden Achsen A₁, A₂ in einem Winkel zueinander ausgerichtet sind, der ungleich 0° ist, **dadurch gekennzeichnet, dass** der Konnektor (10) zwei insbesondere halbschalenartig ausgestaltete Konnektorteile (30) aufweist, zwischen denen die rohrförmigen Hydraulikleitungen (12, 14) anordbar sind, und die zum druckdichten Führen von Hydraulikflüssigkeit aneinander fixierbar sind.

2. Konnektor (10) nach Anspruch 1, **dadurch gekennzeichnet, dass** der erste Verbindungsbereich (16) und der zweite Verbindungsbereich (18) jeweils ein Fixiermittel (20, 22) aufweisen, welches zum Wechselwirken mit jeweils einem Fixiermittel (24, 26) der rohrförmigen Hydraulikleitung (12, 14) ausgestaltet ist, wobei zumindest ein Fixiermittel (20, 22) des ersten oder des zweiten Verbindungsbereichs (16, 18) einen Toleranzausgleich der axialen Position des Fixiermittels (24, 26) wenigstens einer Hydraulikleitung (12, 14) aufweist.

3. Konnektor (10) nach einem der Ansprüche 1 oder 2, **dadurch gekennzeichnet, dass** zwischen den Konnektorteilen (30) eine Dichtung zum Abdichten einer in dem Konnektor (10) angeordneten Führung für Hydraulikflüssigkeit angeordnet ist.

4. Konnektor (10) nach einem der Ansprüche 1 bis 3, **dadurch gekennzeichnet, dass** die Konnektorteile (30) mit einander verschweißt sind.

5. Konnektor (10) nach einem der Ansprüche 1 bis 4, **dadurch gekennzeichnet, dass** der Konnektor (10) zumindest teilweise aus einem Kunststoff geformt ist.

6. Hydraulisches System, insbesondere hydraulisches Kupplungssystem, **dadurch gekennzeichnet, dass** es einen Konnektor (10) nach einem der Ansprüche 1 bis 5 aufweist, wobei an dem ersten Verbindungsbereich (16) und an dem zweiten Verbindungsbereich (18) jeweils eine rohrförmige Hydraulikleitung (12, 14) angeordnet ist.

7. Hydraulisches System nach Anspruch 6 **dadurch gekennzeichnet, dass** die rohrförmigen Hydraulikleitungen (12, 14) aus einem Metall, Stahl oder einem Kunststoff geformt sind.

8. Hydraulisches System nach einem der Ansprüche 6 oder 7 **dadurch gekennzeichnet, dass** wenigstens eine rohrförmige Hydraulikleitung (12, 14) in dem Konnektor (10) um die Achse A₁ oder A₂ rotierbar ist.

9. Hydraulisches System nach einem der Ansprüche 6 bis 8, **dadurch gekennzeichnet, dass** das hydraulische System eine Doppelkupplung aufweist.
